# EUROPÄISCHE PATENTANMELDUNG

(11) **EP 3 696 313 A1**
(43) Veröffentlichungstag der Anmeldung: **19.08.2020**
(21) Anmeldenummer: 20153418.7
(22) Anmeldetag: 23.01.2020
(51) Int. Cl.: D06F 58/02

(54) **WÄSCHEPFLEGEGERÄT, VORZUGSWEISE TROCKNER**

(30) Priorität: 15.02.2019 DE 102019103894
(71) Anmelder: Miele & Cie. KG, 33332 Gütersloh (DE)
(72) Erfinder: Hilbig, Timo, 59192 Bergkamen (DE); Pimenov, Alexander, 31319 Sehnde (DE)

(57) **Zusammenfassung**

Die Erfindung betrifft ein Wäschepflegegerät (1), vorzugsweise einen Trockner (1), mit einem Gebläse (10), welches ausgebildet ist, einen Prozessluftstrom (A) zu erzeugen, mit einem Luftkanal (14), welcher ausgebildet ist, den Prozessluftstrom (A) von dem Gebläse (10) zu erhalten und als Abluftstrom (B) einem Abluftpfad (14a) sowie als Umluft-strom (C) einem Umluftpfad (14c) zuzuführen, wobei der Abluftpfad (14a) und der Umluftpfad (14c) durch ein Trennelement (16) voneinander getrennt sind. Das Wäschepflegegerät (1) ist durch ein Regulierungselement (17) gekennzeichnet, welches dem Gebläse (10) zugewandt drehbar an dem Trennelement (16) angeordnet und ausgebildet ist, die Zuführung des Prozessluftstroms (A) in den Abluftpfad (14a) und in den Umluftpfad (14c) zu verändern.

## Beschreibung

Die Erfindung betrifft ein Wäschepflegegerät, vorzugsweise einen Wäschetrockner, gemäß dem Oberbegriff des Patentanspruchs 1.

Bei vielen elektrischen Geräten wird heutzutage vom Benutzer sehr auf die Energieeffizienz geachtet, so dass die Energieeffizienz eines elektrischen Geräts im Betrieb ein wesentlicher Faktor der Kaufentscheidung des Benutzers als Endkunde sein kann. Dies betrifft auch Haushaltsgeräte allgemein und insbesondere Wäschepflegegeräte wie z.B. Wäschetrockner oder Waschtrockner, welche einen vergleichsweise hohen Energiebedarf im Betrieb aufweisen können.

Bei gewerblichen Wäschetrocknern ist es üblich, die feuchte Prozessluft von dem Luftrückführungskanal als Abluft aus dem Wäschetrockner vollständig in die Umgebung und insbesondere über einen Abluftkanal oder Abluftschlauch nach außerhalb eines Gebäudes, d.h. ins Freie, abzuführen und so die Feuchtigkeit aus der Wäsche sowie aus dem Wäschetrockner zu entfernen. Derartige Wäschetrockner werden auch als Ablufttrockner bezeichnet. Dies führt jedoch zu entsprechend hohen Verlusten der zuvor erzeugten Wärme, welche mit der Abluft aus dem Wäschetrockner abgeführt wird. Entsprechend wird die zu erwärmende Prozessluft aus der Umgebung als Umgebungsluft, als Frischluft bzw. als Zuluft angesogen und muss vollständig erwärmt werden, um den Trocknungsvorgang innerhalb der Wäschetrommel wie zuvor beschrieben bewirken zu können. Dies führt zu einem entsprechend hohen Verbrauch an Energie zur Erwärmung der Umgebungsluft als Prozessluft.

Zur Verbesserung der Energieeffizienz ist es daher bekannt, einen Teil der warmen feuchten Abluft als Umluft im Wäschetrockner zu halten und die Umluft gemeinsam mit einer entsprechend reduzierten Menge an Zuluft als Prozessluft über den Luftzuführungskanal wieder in die Wäschetrommel zu führen. Aufgrund der höheren Temperatur der Prozessluft kann die gewünschte Temperatur der Prozessluft in der Trommel schneller und mit weniger Energie erreicht werden.

Dies wird beispielsweise seitens der Miele & Cie. KG unter der Bezeichnung "Air-Recycling" bei gewerblichen Wäschetrocknern angewendet. Dabei wird eine starre Lufttrennung durch eine entsprechende konstruktive Gestaltung des Luftkanals vorgesehen, so dass ein konstanter Abluftanteil der Prozessluft aus dem Wäschetrockner abgeführt sowie ein konstanter Umluftanteil der Prozessluft mit einem konstanten Zuluftanteil zur Prozessluft vermischt wird, welche dann zu erwärmen ist. Zur Aufteilung des Prozessluftstroms aus der Wäschetrommel in Abluft und Umluft können starr angeordnete Abluft-Umluft-Trennelemente eingesetzt werden, welche auch als Trennbleche oder Leitbleche bezeichnet werden können, siehe z.B. EP 1 682 715 B1. Derartige Leitbleche sind üblicherweise annähernd parallel zur Strömungsrichtung des Prozessluftstroms angeordnet. Die Leitbleche bilden die Basis für die grundsätzliche Anordnung der Trennung der Luftpfade. Dabei findet die Trennung des vom Gebläse aus dem Luftrückführungskanal geförderten Prozessluftstroms in den Abluftanteil bzw. in den Abluftstrom und in den Umluftanteil bzw. in den Umluftstrom, wie bereits erwähnt, unmittelbar am Austritt des Gehäuses des Gebläserads, d.h. hinter der Leitspirale des Gebläserads, statt.

Mit anderen Worten wird lediglich ein Teil der Prozessluft nach dem Verlassen der Trommel als Abluft aus dem Wäschetrockner an die Umgebung abgeführt während der übrige Teil der Prozessluft als Umluft erwärmt und anschließend wieder in die Trommel eingeleitet wird. Dabei wird die Umluft mit zusätzlicher Zuluft aus der Umgebung des Wäschetrockners aufgefüllt, um den Verlust der abgeführten Abluft im Prozessluftstrom wieder auszugleichen.

Als Weiterentwicklung dieser Technik ist es ebenfalls seitens der Miele & Cie. KG unter der Bezeichnung "Air-Recycling Plus" bekannt, im Umluftpfad des Luftkanals eine Klappe anzuordnen, welche in zwei Zuständen steuerbar ausgebildet ist, nämlich offen oder ganz geschlossen (siehe DE 103 49 712 B4 oder EP 1 682 715 B1). Dies kann in Abhängigkeit des sensorisch erfassten Drucks des Prozessluftstroms im Luftzuführungskanal auf dem Weg in die Wäschetrommel erfolgen.

Dabei wird bei dem Wäschetrockner mit der Bezeichnung "Air-Recycling Plus" prozesstechnisch der Umluftpfad des Luftkanals durch die o.g. genannte Klappe dann verschlossen, wenn die Wäsche den gewünschten Trocknungsgrad erreicht hat. Hierdurch wird gleichzeitig ausschließlich Zuluft als Prozessluft verwendet und der Trommel zugeführt. Diese Umschaltung ist statisch an den Programmschritt der Abkühlphase im Trocknungsprogramm gekoppelt. Dadurch wird während der Abkühlphase des Wäschetrockners ein maximaler Volumenstrom der Abluft und damit auch ein maximaler Volumenstrom der Zuluft als Prozessluft realisiert, wodurch der Wäschetrockner schneller abkühlt. Dies hat gegenüber dem Wäschetrockner mit der Bezeichnung "Air Recycling" den Vorteil einer schnelleren Abkühlphase und somit einer kürzeren Gesamtlaufzeit.

Eine Regulierung der Anteile von Abluft und Umluft zueinander ist jedoch bisher nicht bekannt. Vielmehr wird an dieser Stelle der Luftströmung, wie zuvor beschrieben, über die starre Anordnung eines Trennblechs bzw. Leitblechs bisher eine feste Aufteilung vorgenommen.

Zur Aufteilung bzw. Regulierung von Luftströmungen sind aus der Gebäudebelüftungstechnik Drosselklappen oder Irisblenden in Verbindung mit einfachen, ungeregelten Abzweigelementen wie z.B. einem T-Stück bekannt. Diese weisen jedoch den Nachteil auf, dass sie einen Widerstand im Strömungspfad darstellen, der aus Energieeffizienz- und Lärmschutzaspekten vermieden werden sollte.

Aus der Lüftungstechnik ebenfalls bekannte Bypassklappen verfügen üblicherweise über einen großen Öffnungsquerschnitt über den gesamten Verstellbereich. Wird der seitliche Anschluss als Eingang benutzt, kann damit auch ein Luftstrom jeweils vollständig auf den einen oder den anderen Anschluss geschaltet werden. Nachteilig bei Bypassklappen ist jedoch, dass ein definiertes Trennverhältnis nur in sehr kleinen Bereichen um die Randlagen eingestellt werden kann, da es in diesen Bereichen jeweils einen deutlichen Vorzugspfad gibt. In dem sehr großen Bereich dazwischen stellen sich die Volumenströme an den beiden Ausgängen über die jeweiligen Gegendrücke ein und können somit nicht definiert vorgegeben werden.

Aus diesen Gründen sind derartige Bypassklappen für den Einsatz in einem Wäschetrockner zur Regulierung der Anteile von Abluft und Umluft zueinander nicht geeignet, da der Gegendruck in der Abluftleitung üblicherweise in hohem Maße von den baulichen Gegebenheiten am Aufstellungsort abhängt und der Gegendruck der Umluft in den meisten Fällen wesentlich geringer ist. Mit einer Bypassklappe wäre dementsprechend nur ein sehr kleiner Bereich vor dem 100%-Abluft-Endpunkt für die Regelung nutzbar, da im restlichen Verstellbereich fast ausschließlich der Umluftpfad durchströmt würde. Dieser Bereich müsste zudem am Aufstellungsort "angelernt" werden.

Der Erfindung stellt sich somit das Problem, ein Wäschepflegegerät, vorzugsweise einen Wäschetrockner, der eingangs beschriebenen Art bereitzustellen, so dass eine Regulierung der Anteile von Abluft und Umluft zueinander während des Betriebs des Wäschepflegegeräts erfolgen kann. Dies soll vorzugsweise möglichst einfach, kostengünstig, bauraumsparend, genau und bzw. oder flexibel erfolgen können.

Erfindungsgemäß wird dieses Problem durch ein Wäschepflegegerät mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung ein Wäschepflegegerät, vorzugsweise einen Wäschetrockner, mit einem Gebläse, welches in einem Gehäuse angeordnet ist und ausgebildet ist, einen Prozessluftstrom zu erzeugen, wobei das Gehäuse einen Austrittsbereich aufweist, dem sich ein Luftkanal anschließt, welcher ausgebildet ist, den Prozessluftstrom von dem Gebläse zu erhalten und als Abluftstrom einem Abluftpfad sowie als Umluftstrom einem Umluftpfad zuzuführen, wobei der Abluftpfad und der Umluftpfad durch ein in den Prozessluftstrom hineinragendes Trennelement voneinander getrennt sind.

Das Wäschepflegegerät ist durch ein Regulierungselement gekennzeichnet, welches dem Gebläse zugewandt drehbar an dem Trennelement angeordnet und ausgebildet ist, die Zuführung des Prozessluftstroms in den Abluftpfad und in den Umluftpfad zu verändern. Mit anderen Worten weist das Trennelement in seiner Verlängerung zum Gebläse hin, d.h. in den Prozessluftstrom hinein, ein Regulierungselement auf, welches gegenüber dem Trennelement derart drehbar ist, dass die dem Gebläse zugewandten Öffnungen des Abluftpfads und des Umluftpfads in ihrer Größe zueinander verändert werden können. Hierdurch kann der Anteil der Prozessluft, welcher z.B. dem Abluftpfad als Abluft zugeführt wird, verringert und gleichzeitig im gleichen Maße der Anteil der Prozessluft, welcher dem Umluftpfad als Umluft zugeführt wird, vergrößert werden. Dies kann die Regulierung der Anteile von Abluft und Umluft zueinander während des Betriebs des Wäschepflegegeräts ermöglichen. Durch eine derartige Regulierung der Prozessluft können die Möglichkeiten zum energieeffizienten Betrieb derartiger Wäschepflegegeräte und insbesondere derartiger Wäschetrockner verbessert werden.

Grundsätzlich kann das erfindungsgemäße Regulierungselement auch für andere Anwendungsfälle als Haushalts- bzw. Wäschepflegegeräte eingesetzt werden, bei denen ein Luftstrom hinter einem Gebläse, möglichst verlustarm, so aufgeteilt werden soll, dass in einem Pfad, z.B. dem mit dem höheren Gegendruck, ein höherer Luftvolumenstrom fließt als es bei einer Regelung über die Druckverhältnisse der Fall wäre.

Gemäß einem Aspekt der Erfindung ist das Regulierungselement als Trennklappe ausgebildet. Das Regulierungselement kann auch als Trennzunge, als Zunge oder als Zungenblech bezeichnet werden. Hierunter ist ein flaches Element zu verstehen, welches sich mit einer Kante in den Prozessluftstrom hinein erstreckt, um den Strömungswiderstand gegenüber der Prozessluft möglichst gering bzw. auf dem Niveau des Trennelements zu halten.

Mit anderen Worten kann das Regulierungselement so gestaltet sein, dass das Regulierungselement möglichst keine zusätzlichen Strömungswiderstände in das System einbringt, da dies sonst durch eine höhere Gebläseleistung und Gebläsedrehzahl zu kompensieren sein könnte. Dies könnte zu einem erhöhten Geräuschpegel führen, was für einen Benutzer unangenehm sein könnte. Zusätzlich oder alternativ könnte hierdurch der Energieverbrauch ansteigen, was zu zusätzlichen Betriebskosten sowie zu einer zusätzlichen Umweltbelastung führen könnte.

Gemäß einem weiteren Aspekt der Erfindung ist das Regulierungselement ausgebildet, den Prozessluftstrom vollständig dem Abluftpfad, vollständig dem Umluftpfad oder teilweise dem Abluftpfad und teilweise dem Umluftpfad zuzuführen. Die teilweise Zuführung zum Abluftpfad und zum Umluftpfad kann dabei vorzugsweise in unterschiedlichen Stellungen, d.h. mit unterschiedlichen Anteilen, erfolgen. Dies kann vorzugsweise stufenlos erfolgen. Hierdurch kann eine Regulierung der Anteile von Abluft und Umluft zueinander während des Betriebs des Wäschepflegegeräts zwischen den maximalen Stellungen, d.h. den beiden Endlagen, sowie dazwischen erfolgen. Dies kann ein hohes Maß an Flexibilität bei der Regulierung der Anteile von Abluft und Umluft zueinander ermöglichen.

Dabei kann ein alleiniger Umluftbetrieb z.B. in der Aufheizphase des Betriebs des Wäschepflegegeräts vorteilhaft sein, um die Wärme zunächst vollständig im Wäschepflegegerät zu halten und so die gewünschte Erwärmung der Prozessluft zu beschleunigen. Ebenso kann ein kompletter Abluftbetrieb z.B. in der Abkühlphase des Betriebs des Wäschepflegegeräts vorteilhaft sein, um die Wärme möglichst schnell aus dem Wäschepflegegerät abzuführen.

Gemäß einem weiteren Aspekt der Erfindung ist das Regulierungselement ausgebildet, dass im Laufe eines Prozesses stets ein Abluftstrom erzeugt wird. Beispielsweise kann der Anteil der Prozessluft, welcher als Abluft seitens des Regulierungselements einstellbar ist, mindestens 5% betragen, so dass der Umluftstrom 95% des Prozessluftstroms beträgt. Hierzu kann dem Stellwert der Stellgröße, welche der Stellung des verstellbaren Regulierungselements bzw. der Trennklappe entsprechen, ein oberer oder unteren Grenzwert vorgegeben werden. Durch diesen minimalen oder maximalen Stellwert kann sichergestellt werden, dass stets ein Abluftstrom vorliegt, unabhängig von dem Stellwert der Stellgröße, welche von dem Regelungselement erzeugt wird.

Einen derartigen Mindest-Abluftvolumenstrom einzustellen kann vorteilhaft sein, damit die Abluft sicher aus dem Wäschetrockner und z.B. durch eine Abluftleitung hindurch gefördert werden kann. Indem der Abluftanteil geregelt wird, kann ein höherer Strömungswiderstand in der Abluftleitung und somit auch eine längere Abluftleitung am Ort der Anwendung zugelassen werden. Das erfindungsgemäße Regelungselement kann den Abluftanteil abhängig vom Temperaturverhalten des Wäschetrockners variieren, wie zuvor beschrieben. Sollte es z.B. einen vergleichsweise hohen Strömungswiderstand in der Abluftleitung geben, dann ist davon auszugehen, dass der Wäschetrockner seine Abluft und somit auch die Wärme schlechter abführen kann. Die erfindungsgemäße dynamische Regelung kann auf den resultierenden, schnelleren Anstieg der Ist-Temperatur der Prozessluft selbsttätig mit der Einstellung eines vergleichsweise höheren Abluftanteils reagieren, damit es nicht zum Überschreiten der SollTemperatur der Prozessluft kommt. Damit kann dem höheren Strömungswiderstand in der Abluftleitung mit einem höheren Luftdruck der Abluft begegnet werden, welchen der Wäschetrockner durch einen höheren Abluftanteil erzeugen kann.

Gemäß einem weiteren Aspekt der Erfindung weist das Wäschepflegegerät einen Antrieb auf, welcher angeordnet und ausgebildet ist, die Stellung des Regulierungselements zu verändern. Hierdurch kann eine aktive Regulierung der Stellung des Regulierungselements erfolgen. Als Antrieb kann vorzugsweise ein elektrischer Antrieb mit einem Elektromotor verwendet werden, da in Wäschepflegegeräten üblicherweise ohnehin elektrische Energie zur Verfügung steht, welche zum Betrieb des elektrischen Antriebs verwendet werden kann. Alternativ sind jedoch auch Antriebe denkbar, welche z.B. pneumatisch oder hydraulisch betrieben werden können.

Gemäß einem weiteren Aspekt der Erfindung weist der Antrieb ein Exzenterelement auf, welches ausgebildet ist, die Stellung des Regulierungselements zu verändern. Unter einem Exzenter wird eine auf einer Welle angebrachte Steuerungsscheibe verstanden, deren Mittelpunkt außerhalb der Wellenachse liegt. Hierdurch kann eine rotatorische Drehbewegung in eine translatorische Längenbewegung umgewandelt werden. Somit kann eine translatorische Bewegung des Regulierungselements, insbesondere zwischen den beiden Extremstellungen der Randlagen des Regulierungselements um den Prozessluftstrom vollständig dem Abluftpfad oder dem Umluftpfad zuzuführen, mittels eines Antriebs mit einem Exzenterelement rotatorisch ausgeführt werden. Dies kann eine einfache und wirkungsvolle Umsetzung dieser Bewegung ermöglichen.

Vorteilhaft kann weiterhin sein, dass gerade in den Randlagen bzw. Endlagen des Regulierungselements, d.h. bei komplettem Umluftbetrieb oder bei komplettem Abluftbetrieb, hohe Kräfte zum Verstellen des Regulierungselements erforderlich sein können, da in diesen Bereichen das Regulierungselement durch den Prozessluftstrom aus statischem Druck und Kraftwirkung durch Impulsänderung bei der Umlenkung des Luftstroms gegen den jeweiligen Endanschlag gepresst werden kann. Bei vertikaler Bewegungsrichtung im unteren Endanschlag kann dies noch zusätzlich durch die Gravitationskraft unterstützt werden, welche auf das Regulierungselement wirken kann. Mit anderen Worten kann der Kraftverlauf zur Betätigung des Regulierungselements stark nichtlinear sein. Der Antrieb kann daher für die Lastspitzen an den Endlagen auszulegen sein.

Außerhalb der Endanschläge kann der Kraftbedarf für die Verstellung des Regulierungselements jedoch erheblich geringer ausfallen. Wird somit der Antrieb des Regulierungselements auf die Kräfte zur Überwindung der Randlagen des Regulierungselements ausgelegt, führt dies üblicherweise zu einer Überdimensionierung des Antriebs für die Stellungen des Regulierungselements, welche zwischen den Randlagen liegen. Mit anderen Worten würde dies bei der Verwendung eines Direktantriebs eine Überdimensionierung über fast den kompletten Verstellbereich des Regulierungselements bedeuten. Diese Überdimensionierung führt üblicherweise zu höheren Kosten des Antriebs.

Dieser Zielkonflikt kann durch die Verwendung des Exzenterelements gelöst werden, da hierdurch ein Kraftverlauf des Antriebs realisiert werden kann, der dem zuvor beschriebenen positionsabhängigen Kraftbedarf des Regulierungselements entsprechen kann. Dadurch ist der Einsatz eines vergleichsweise kleinen, einfach aufgebauten und kostengünstigen Elektromotors für den Antrieb möglich, da eine Überdimensionierung für die Endlagen des Regulierungselements dank des Exzenterelements nicht mehr erforderlich ist.

Gemäß einem weiteren Aspekt der Erfindung ist das Exzenterelement in dem Abluftpfad oder in dem Umluftpfad, vorzugsweise in dem Abluftpfad, angeordnet. Durch die Anordnung des Exzenterelements in einem der beiden Luftpfade kann eine möglichst direkte Wirkung des Exzenterelements auf das Regulierungselement erreicht werden. Das Antreiben des Exzenterelements kann dabei vorzugsweise von außerhalb des Luftpfads erfolgen, um den zusätzlichen Strömungswiderstand in dem entsprechenden Luftpfad möglichst gering zu halten. Auch kann eine Verschmutzung von weiteren Antriebselementen z.B. durch Flusen im Prozessluftstrom bei einem Wäschetrockner als Wäschepflegegerät vermieden werden.

Das Exzenterelement dabei vorzugsweise im Abluftpfad anzuordnen kann dahingehend vorteilhaft sein, dass der Abluftpfad bei einer vertikalen Anordnung der beiden Luftpfade übereinander üblicherweise der untere Luftpfad ist und das Exzenterelement somit von unten entgegen der Gewichtskraft gegen das Regulierungselement drücken kann. Mit anderen Worten kann der Kontakt zwischen Regulierungselement und Exzenterelement in diesem Fall zumindest teilweise durch die Gewichtskraft des Regulierungselements gehalten werden, so dass auf weitere entsprechende Maßnahmen verzichtet werden kann oder diese zumindest schwächer dimensioniert werden können, um die gewünschte Wirkung zu erreichen. Dies kann Kosten und bzw. oder Bauraum sparen.

Gemäß einem weiteren Aspekt der Erfindung weist der Antrieb eine Betätigungswelle auf, welche ausgebildet ist, das Exzenterelement rotatorisch zu betätigen. Hierdurch kann eine Kraftübertragung eines entsprechenden Motors wie z.B. eines Elektromotors des Antriebs auf das Exzenterelement erfolgen. Insbesondere kann der Motor hierzu aus den zuvor genannten Gründen außerhalb der Luftpfade angeordnet werden.

Gemäß einem weiteren Aspekt der Erfindung verläuft die Drehachse der Betätigungswelle parallel zu der Drehachse des Gebläses. Somit kann der Prozessluftstrom von dem Gebläse direkt zu dem Regulierungselement hin gefördert werden, was Umlenkungen des Prozessluftstroms vermeiden kann.

Gemäß einem weiteren Aspekt der Erfindung ist das Regulierungselement mittels eines Drehelements an dem Trennelement angeordnet. Das Drehelement kann vorzugsweise als Schwenkelement ausgebildet sein. Hierdurch kann eine einfache Beweglichkeit des Regulierungselements gegenüber dem Trennelement bei gleichzeitig sicherem Halt erreicht werden.

Gemäß einem weiteren Aspekt der Erfindung verläuft die Drehachse des Drehelements parallel zu der Drehachse des Gebläses. Somit kann der Prozessluftstrom von dem Gebläse direkt zu dem Regulierungselement hin gefördert werden, was Umlenkungen des Prozessluftstroms vermeiden kann.

Gemäß einem weiteren Aspekt der Erfindung weist das Wäschepflegegerät ein Führungselement auf, welches ausgebildet und angeordnet ist, das Regulierungselement in Kontakt mit dem Exzenterelement zu halten. Hierdurch kann das Exzenterelement selbst in losem Kontakt mit dem Regulierungselement stehen, z.B. durch dessen Gewichtskraft, was die Verbindung zwischen Exzenterelement und Regulierungselement gerade aufgrund der Rotationsbewegungen des Exzenterelements einfach gestalten kann. Um dabei einen durchgehenden Kontakt zwischen Exzenterelement und Regulierungselement sicherzustellen, kann das Führungselement verwendet werden. Das Führungselement kann hierzu ausgebildet sein, das Regulierungselement an das Exzenterelement heranzudrücken und bzw. oder heranzuziehen.

Gemäß einem weiteren Aspekt der Erfindung ist das Führungselement eine Zugfeder. Die Zugfeder kann mechanisch z.B. als Spiralfeder oder aus einem elastomeren Material z.B. als Gummizugband ausgebildet sein. Hierdurch kann die zuvor beschriebene Wirkung einfach, kostengünstig und bzw. oder bauraumsparend umgesetzt werden.

Gemäß einem weiteren Aspekt der Erfindung ist der Antrieb ausgebildet, in lediglich einer Drehrichtung betrieben zu werden. Dies kann zur Umsetzung der Regulierung ausreichend sein, da das Exzenterelement durch Rotation in lediglich einer Drehrichtung in alle Stellungen einer Kreisbewegung überführt werde kann. Somit kann ein Antrieb mit einer Drehrichtung ausreichend sein, um das Regulierungselement zu betreiben. Gleichzeitig können die Anforderungen an den Antrieb hierdurch gering gehalten werden, was zu entsprechend geringen Kosten für den Antrieb führen kann.

Gemäß einem weiteren Aspekt der Erfindung ist der Antrieb ausgebildet, sowohl in einer ersten Drehrichtung als auch in einer zweiten Drehrichtung betrieben zu werden. Dies kann zwar einen entsprechenden Antrieb erfordern, jedoch kann jede Drehstellung direkter und damit schneller erreicht werden als bei einem Antrieb mit lediglich einer Drehrichtung.

Gemäß einem weiteren Aspekt der Erfindung weist das Wäschepflegegerät einen Endlagenschalter des Abluftpfads und bzw. oder einen Endlagenschalter des Umluftpfads auf, welcher ausgebildet ist, in einer Endlage des Regulierungselements von dem Regulierungselement kontaktiert zu werden. Hierdurch kann sensorisch erfasst werden, ob sich das Regulierungselement in einer entsprechenden Endlage befindet, und dann z.B. der Betrieb des Antriebs angehalten werden muss, um diese Stellung zu halten. Insbesondere bei der Verwendung eines Exzenterelements kann dies nützlich sein, da ein weiterer Betrieb des Antriebs das Exzenterelement über diese Stellung hinaus bewegen würde.

Gemäß einem weiteren Aspekt der Erfindung sind die Endlagenschalter derart positioniert, dass ein Mindest-Abluftvolumenstrom einstellbar ist.

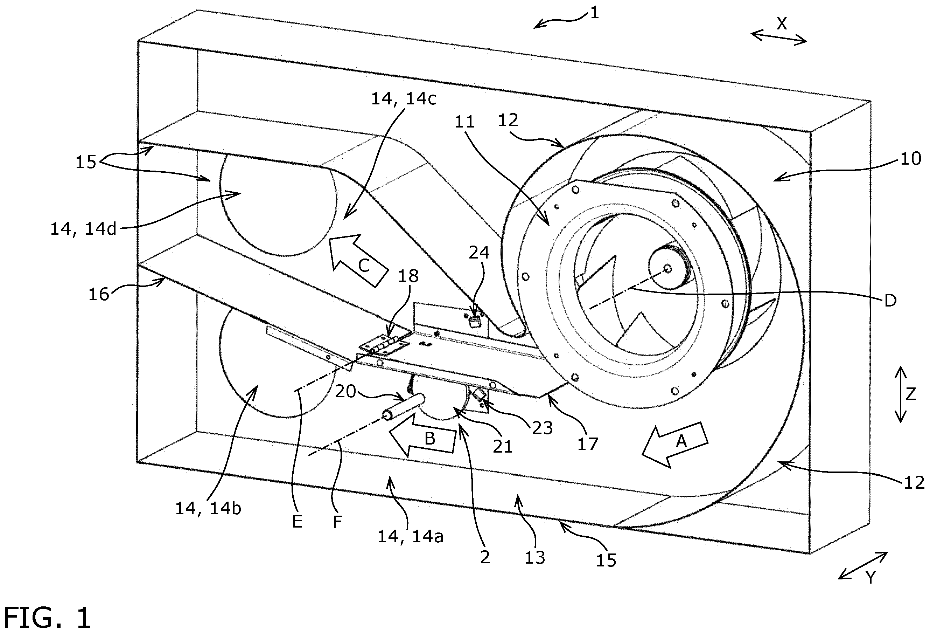

Ein Ausführungsbeispiel der Erfindung ist in den Zeichnungen rein schematisch dargestellt und wird nachfolgend näher beschrieben. Es zeigt
- Figur 1: eine perspektivische Darstellung eines erfindungsgemäßen Wäschepflegegeräts im Bereich eines Gebläses;
- Figur 2: einen Querschnitt der Figur 1 mit dargestellten Druckverhältnissen;
- Figur 3: einen Querschnitt der Figur 1 mit einem Regulierungselement in einer ersten Stellung;
- Figur 4: einen Querschnitt der Figur 1 mit dem Regulierungselement in einer zweiten Stellung;
- Figur 5: einen Querschnitt der Figur 1 mit dem Regulierungselement in einer dritten Stellung;
- Figur 6: einen Querschnitt der Figur 1 mit dem Regulierungselement in einer vierten Stellung; und
- Figur 7: einen Querschnitt der Figur 1 mit dem Regulierungselement in einer fünften Stellung.

Die o.g. Figuren werden in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

Es wird ein erfindungsgemäßes Wäschepflegegerät 1 in Form eines Wäschetrockners betrachtet. Der Wäschetrockner 1 weist ein Gebläse 10 in Form eines Radiallüfters auf, welcher ein Gebläserad 11 bzw. ein Lüfterrad aufweist, welches um eine Drehachse D rotieren kann.

Das Gebläse 10 ist in einem Gehäuse 12 angeordnet, welches das Gebläserad 11 als Leitspirale 12 etwa spiralförmig umschließt. Das Gehäuse 12 weist einen Austrittsbereich 13 auf, welchem sich ein Luftkanal 14 anschließt.

Der Luftkanal 14 ist zweigeteilt ausgebildet und weist einen Abluftpfad 14a des Luftkanals 14 auf, welcher zu einer Austrittsöffnung 14b hinführt. Entsprechend weist der Luftkanal 14 auch einen Umluftpfad 14c auf, welcher zu einer Austrittsöffnung 14d hinführt. Der Abluftpfad 14a kann auch als Abluftleitung 14a und der Umluftpfad 14c auch als Umluftleitung 14c bezeichnet werden. Der Luftkanal 14 wird dabei sowohl in der Breite Y als auch in der Höhe Z bzw. Tiefe X von einem Luftkanalgehäuse 15 im Wesentlichen umschlossen.

Im Wesentlichen in der Höhe Z werden der Abluftpfad 14a und der Umluftpfad 14c von einem in den Prozessluftstrom A hineinragenden starr angeordneten Trennelement 16 voneinander getrennt, welches auch als Trennblech oder als Leitblech bezeichnet werden kann. Somit kann von dem Gebläse (Radiallüfter) 10 ein Prozessluftstrom A erzeugt und gefördert werden, welcher den Radiallüfter über dessen Austrittsbereich 13 verlassen und sich anschließend im Luftkanal 14 in einen Abluftstrom B des Abluftpfads 14a und in einen Umluftstrom C des Umluftpfads 14c aufteilen kann.

Um diese Aufteilung des Prozessluftstroms A regulieren zu können, weist das Trennelement 16 an seinem dem Gebläse 10 zugewandten offenen Ende ein Regulierungselement 17 in Form einer Trennklappe 17 auf, welche auch als Trennzunge, als Zunge oder als Zungenblech bezeichnet werden kann. Die Trennklappe 17 ist mittels eines Drehelements 18, dessen Drehachse E parallel zur Drehachse D des Gebläses 10 verläuft, drehbeweglich am offenen Ende des Trennelements 16 angeordnet. Das Drehelement 18 ist als Schwenkelement 18 bzw. als Scharnier 18 ausgebildet.

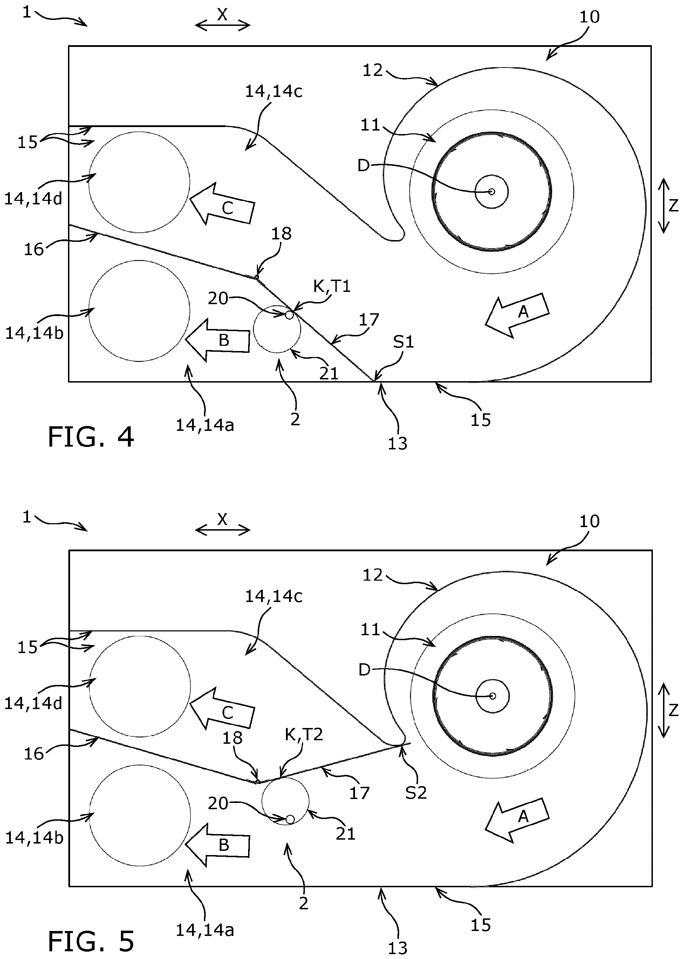

Die Trennklappe 17 kann somit in der Höhe Z zwischen einer ersten, unteren Endlage S1 und einer zweiten, oberen Endlage S2 geschwenkt werden, siehe z.B. Figuren 4 und 5. Hierdurch kann je nach Stellung der Trennklappe 17 der Anteil des Prozessluftstroms A, welcher dem Abluftpfad 14a des Luftkanals 14 bzw. dem Umluftkanal 14c des Luftkanals 14 zugeführt wird, gegenüber dem anderen Luftpfad 14a, 14c verändert werden. Dies ermöglicht eine Regulierung des Abluftstroms 14a und des Umluftstroms 14c zueinander.

Ist es im Laufe eines Prozesses erforderlich, dass stets ein Abluftstrom erzeugt wird, kann der Anteil der Prozessluft, welcher als Abluft seitens des Regulierungselements 17 einstellbar ist, beispielhaft mindestens 5% betragen, so dass der Umluftstrom 95% des Prozessluftstroms beträgt. Hierzu kann dem Stellwert der Stellgröße, welche der Stellung des verstellbaren Regulierungselements 17 bzw. der Trennklappe 17 entsprechen, ein oberer oder unteren Grenzwert vorgegeben werden. Durch diesen minimalen oder maximalen Stellwert kann sichergestellt werden, dass stets ein Abluftstrom vorliegt.

Um die Trennklappe 17 zu schwenken ist ein Antrieb 2 vorgesehen, dessen elektrischer Motor außerhalb des Luftkanalgehäuses 15 angeordnet ist (nicht dargestellt). Von dem elektrischen Motor des Antriebs 2 führt eine Betätigungswelle 20 in der Querrichtung Y in den Abluftpfad 14a des Luftkanals 14 hinein und wird auf der gegenüberliegenden Innenseite des Luftkanals 14 drehbar gelagert (nicht dargestellt). Eine Drehachse F der Betätigungswelle 20 verläuft dabei parallel zur Drehachse D des Gebläses 10 sowie zur Drehachse E des Scharniers 18.

Etwa mittig in der Querrichtung Y ist auf der Betätigungswelle 20 ein Exzenterelement 21 in Form einer Exzenterscheibe 21 angeordnet. Dabei ist die Exzenterscheibe 21 randseitig an der Betätigungswelle 20 angeordnet, um einen möglichst großen Hub erzeugen zu können. Die Betätigungswelle 20 erstreckt sich in der Querrichtung Y an einer Position des Abluftpfads 14a des Luftkanals 14, so dass die Exzenterscheibe 21 mit ihrem Rand bzw. mit ihrer Kante die Trennklappe 17 in der Höhe Z von unten anheben bzw. absenken kann. Das Absenken erfolgt dabei durch das Ausweichen der Exzenterscheibe 21 in Kombination mit der Gewichtskraft der Trennklappe 17.

Zusätzlich wirkt ein Führungselement 22 als Rückholelement 22 in der Höhe Z von unten parallel zur Exzenterscheibe 21 auf die Trennklappe 17, um die Trennklappe 17 sicher an einem Kontaktpunkt K in berührendem Kontakt mit der Exzenterscheibe 21 zu halten. Das Rückholelement 22 ist hierzu als Rückstellfeder 22 in Form einer Zugfeder 22 ausgebildet und mit ihrem einen Ende an einem Trennklappenbefestigungspunkt 22a an der Unterseite der Trennklappe 17 und mit ihrem anderen gegenüberliegenden Ende an einem Luftkanalgehäusebefestigungspunkt 22b an der Innenseite des Luftkanalgehäuses 15 befestigt, so dass die Federkraft der Zugfeder 22 zwischen diesen beiden Punkten 22a, 22b wirken kann.

In dem Bereich der in der Querrichtung Y hinteren Wand des Luftkanalgehäuses 15 ist dort, wo sich die Trennklappe 17 in der ersten, unteren Endlage S1 befindet, ein Endlagenschalter 23 des Abluftpfads 14a angeordnet. Ebenso ist in dem Bereich der in der Querrichtung Y hinteren Wand des Luftkanalgehäuses 15 dort, wo sich die Trennklappe 17 in der zweiten, oberen Endlage S2 befindet, ein Endlagenschalter 24 des Umluftpfads 14c angeordnet. Über die beiden Endlagenschalter 23, 24 kann jeweils sensorisch erkannt werden, ob sich die Trennklappe 17 in der ersten, unteren Endlage S1 bzw. in der zweiten, oberen Endlage S2 befindet oder nicht. Diese Information kann zur Ansteuerung des Antriebs 2 verwendet werden, um die Trennklappe 17 in eine dieser beiden Endlagen S1, S2 zu bringen.

Mit anderen Worten wird auf der von der Drehachse D des Gebläserads 11 abgewandten Seite der Trennklappe 17, d.h. im Abluftpfad 14a, die Betätigungswelle 20 eingesetzt, deren Drehachse F parallel zur Drehachse E der Trennklappe 17 liegt. Die Betätigungswelle 20 wird so im Abluftstrom B angeordnet, dass die Betätigungswelle 20 im theoretischen Schwenkbereich der Trennklappe 17 liegt, im tatsächlichen Schwenkbereich bis zur ersten, unteren Endlage S1 jedoch noch nicht mit der Trennklappe 17 kollidiert.

Auf der Betätigungswelle 20 befindet sich die Exzenterscheibe 21, die so dimensioniert ist, dass sich eine erste, untere Totpunktlage T1 gegenüber der Trennklappe 17 genau dann ausbildet, wenn die Trennklappe 17 in der ersten, unteren, vom Gebläse 10 abgewandten Endlage S1 steht, siehe z.B. Figur 4. Gleichzeitig ist die Exzenterscheibe 21 so dimensioniert, dass sich in Bezug auf die Trennklappe 17 eine zweite, obere Totpunktlage T2 bildet, wenn die Exzenterscheibe 21 in der zweiten, oberen, dem Gebläse 10 zugewandten Endlage S2 steht, siehe z.B. Figur 5.

Sofern ein tangentialer Kontakt zwischen Trennklappe 17 und Exzenterscheibe 21 durch die Zugfeder 22 sichergestellt ist, führen Umdrehungen der Exzenterscheibe 21 zu einer Pendelbewegung der Trennklappe 17 zwischen den beiden Endlagen S1, S2. Das bedeutet, dass nur eine Drehrichtung R1, R2 für den kompletten Verstellweg der Trennklappe 17 in beide Drehrichtungen R1, R2 erforderlich ist.

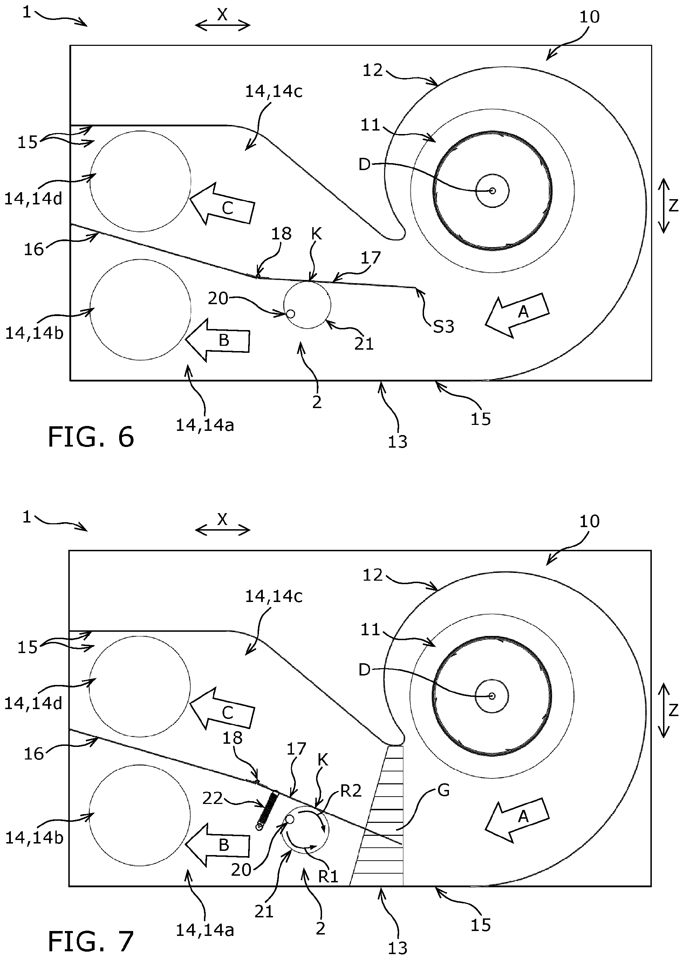

Der tangentiale Kontakt zwischen Trennklappe 17 und Exzenterscheibe 21 wird sichergestellt, indem die Trennklappe 17 mithilfe der Zugfeder 22 in Richtung der Exzenterscheibe 21 vorgespannt wird. Dies ist erforderlich, da es zwischen den beiden Endlagen S1, S2 einen Umschlagpunkt S3 gibt, siehe z.B. Figur 6, an dem sich die durch den Prozessluftstrom A verursachten Druckkräfte auf beiden Seiten der Trennklappe 17 aufheben.

Zwischen der ersten, unteren Endlage S1 und dem Umschlagpunkt S3 wird die Trennklappe 17 durch den Prozessluftstrom A an die Exzenterscheibe 21 angedrückt und so der tangentiale Kontakt am Kontaktpunkt K sichergestellt. Zwischen der zweiten, oberen Endlage S2 und dem Umschlagpunkt S3 wird die Trennklappe 17 durch den Prozessluftstrom A von der Exzenterscheibe 21 weggedrückt. Daher muss die Zugfeder 22 zwischen diesen Punkten eine ausreichend hohe Kraft in Richtung der Exzenterscheibe 21 auf die Trennklappe 17 ausüben, damit die Trennklappe 17 nicht durch den Prozessluftstrom A in die zweite, obere Endlage S2 E2 bewegt wird.

Durch die Totpunktlagen T1, T2 der Exzenterscheibe 21 in den Endlagen S1, S2 der Bewegung der Trennklappe 17 bringt die Exzenterscheibe 21 genau im Bereich um diese Stellungen ihre maximale Kraft auf. Dadurch ist nur ein kleines Motordrehmoment erforderlich, um die Trennklappe 17 aus den beiden Endlagen S1, S2 der Bewegung der Trennklappe 17 herauszubewegen.

Der Kraftverlauf zwischen den Totpunktlagen T1, T2 der Exzenterscheibe 21 und den Endlagen S1, S2 der Bewegung der Trennklappe 17 ist je nach Drehrichtung R1, R2 unterschiedlich. Ausgehend von dem ersten, unteren Totpunkt T1 in der ersten, unteren Endlage S1 bewegt sich der Kontaktpunkt K von Exzenterscheibe 21 und Trennklappe 17 in der ersten Drehrichtung R1 von der Drehachse E der Trennklappe 17 weg. Dadurch verlängert sich der wirksame Hebelarm für die Bewegung der Trennklappe 17 und der Kraftbedarf sinkt.

In der zweiten Drehrichtung R2, wieder ausgehend von dem ersten, unteren Totpunkt T1 in der ersten, unteren Endlage S1, bewegt sich der Kontaktpunkt K von Exzenterscheibe 21 und Trennklappe 17 auf die Drehachse E der Trennklappe 17 zu, was zu einem höheren Kraftbedarf aufgrund des verkürzten Hebelarms führt.

Ausgehend von dem zweiten, oberen Totpunkt T2 sind die Verhältnisse genau anders herum, d.h. eine Bewegung in die erste Drehrichtung R1 erfordert eine höhere Kraft, eine Drehbewegung in die zweite Drehrichtung R2 erfordert eine niedrigere Kraft.

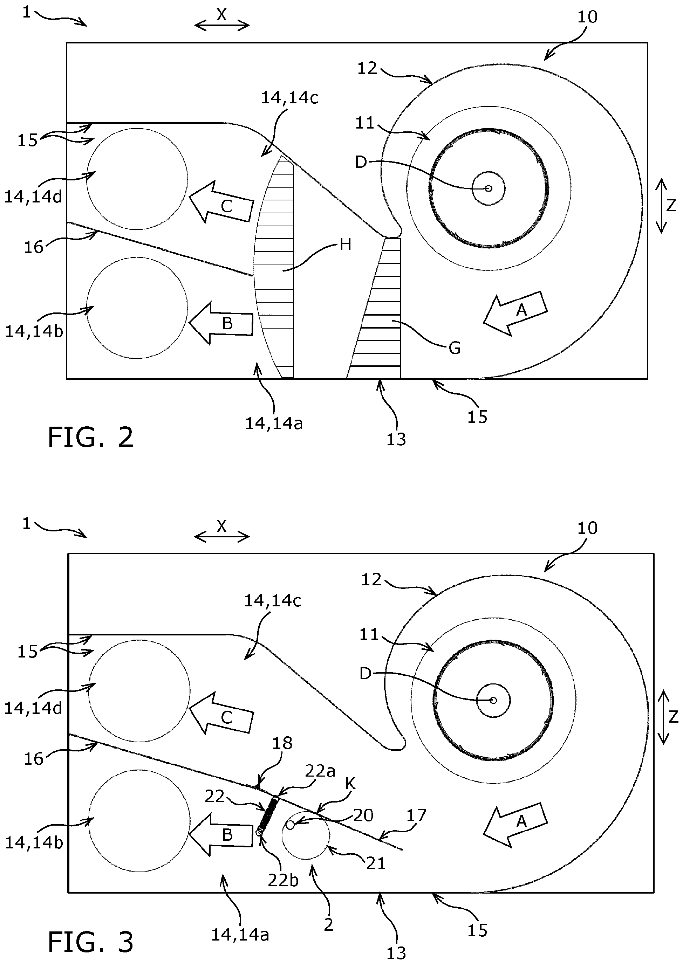

Durch diesen Zusammenhang ist die Anordnung der Exzenterscheibe 21 im Hochdruckpfad, d.h. im Abluftpfad 14a, des Luftkanals 14, wie sich aus den Druckverläufen des Nahfelds G im Vergleich zum Fernfelds H der Figur 2 ergibt, besonders vorteilhaft, speziell in Verbindung mit der ersten Drehrichtung R1. Während die Trennklappe 17 auf dem Weg von der ersten, unteren Endlage S1 zum Umschlagpunkt S3 den Bereich des höchsten Gegendrucks und damit des höchsten Kraftbedarfs durchfährt, werden durch die erste Drehrichtung R1 die günstigeren Hebelverhältnisse ausgenutzt, um das zur Drehung der Exzenterscheibe 21 erforderliche Drehmoment gering zu halten.

Das Rückholelement 22, wenn es besonders kostengünstig als Zugfeder 22 ausgeführt wird, übt in diesem Bereich durch den kurzen Spannweg nur eine geringe zusätzliche Kraft auf die Exzenterscheibe 21 aus. Ab dem Umschlagpunkt S3 muss bis zur zweiten, oberen Endlage S2 nur die Differenz aus Rückholkraft minus Druckkraft in Richtung der zweiten, oberen Endlage S2 überwunden werden.

Auf dem Rückweg von der zweiten, oberen Endlage S2 zur ersten, unteren Endlage S1 muss nur die Reibkraft, die infolge des Anpressens der Trennklappe 17 an die Exzenterscheibe 21 entsteht, überwunden werden, weshalb hierfür auch der kürzere Pfad mit den ungünstigeren Hebelverhältnissen gewählt werden kann.

Die Reibkraft an dem Kontaktpunkt K zwischen Exzenterscheibe 21 und Trennklappe 17 kann durch eine geeignete Werkstoffpaarung besonders niedrig gehalten werden.

Die Funktion der Zugfeder 22 kann durch die Gewichtskraft der Trennklappe 17 unterstützt werden, wenn die Drehachse E der Trennklappe 17 horizontal angeordnet wird und der Hochdruckpfad, d.h. im Abluftpfad 14a, des Luftkanals 14 unten liegt. Dies stellt die vorteilhafteste Ausführungsform dar, da die Zugfeder 22 besonders klein ausfallen kann.

Alternativ zur Zugfeder 22 kann auch eine direkte Verbindung zwischen Exzenterscheibe 21 und Trennklappe 17 z.B. mit einer Schiebehülse zur Sicherstellung des permanenten Kontaktpunks K eingesetzt werden.

Auf diese Art und Weise kann erfindungsgemäß ein besonders kostengünstiger, robuster, gut wartbarer und einfach umsetzbarer Antrieb 2 für eine Luftweiche umgesetzt werden, die für die speziellen Randbedingungen im Prozessluftstrom A direkt hinter dem Gebläse 10 ausgelegt ist.

Der besondere Vorteil ist, dass über den wie beschrieben gestalteten Antrieb 2 der Exzenterscheibe 21 ein Kraft- bzw. Drehmomentprofil realisiert werden kann, welches ideal zu dem Kraftbedarf der Luftweiche passt. Speziell wird im Vergleich zu einem Kurbeltrieb eine bessere Kraftausnutzung durch den variablen Hebelarm erzielt. Dadurch ist insgesamt nur ein sehr kleiner Motor des Antriebs 2 erforderlich. Gegenüber einem Kurbeltrieb werden zudem weniger bewegte Teile benötigt. Das vereinfacht die Montage deutlich und verringert die Fehleranfälligkeit z.B. insbesondere in der flusenbehafteten Prozessluft innerhalb eines Wäschetrockners 1.

Der weitere Vorteil besteht darin, dass nur eine Drehrichtung R1, R2 des Antriebs 2 erforderlich ist, anders als bei Direktantrieben.

Weitere Vorteile liegen in der Ausführung dieser Lösung mit Blick auf eine Gleichteilestrategie, die den Einsatz vieler gleicher Teile in den unterschiedlichen Gerätegrößen vorsieht, sowie in der wirtschaftlichen Integration in neue Geräteserien, deren Peripherie nur geringfügig angepasst werden müsste.

### Bezugszeichenliste (Bestandteil der Beschreibung)

- A: Prozessluftstrom; Luftstrom; Volumenstrom
- B: Abluftstrom; Abluftteil des Luftstroms A
- C: Umluftstrom; Umluftteil des Luftstroms A

- D: Drehachse des Gebläserads 11
- E: Drehachse der Trennklappe 17
- F: Drehachse der Betätigungswelle 20

- G: Druckverlauf des Nahfelds; Druckverlauf im Austrittsbereich 13
- H: Druckverlauf des Fernfelds; Druckverlauf bei Aufteilung des Luftkanals 14

- K: Kontaktpunkt zwischen Trennklappe 17 und Exzenterelement 21

- R1: erste Drehrichtung
- R2: zweite Drehrichtung

- S1: erste/untere Endlage
- S2: zweite/obere Endlage
- S3: Umschlagpunkt

- T1: erste/untere Totpunktlage
- T2: zweite/obere Totpunktlage

- X: Längsrichtung; Tiefe
- Y: Querrichtung; Breite
- Z: vertikale Richtung; Höhe

- 1: Wäschepflegegerät; Wäschetrockner
- 10: Gebläse; Radiallüfter
- 11: Gebläserad; Lüfterrad
- 12: Gehäuse des Gebläserads 11, Leitspirale des Gebläserads 11
- 13: Austrittsbereich
- 14: Luftkanal; Luftleitung
- 14a: Abluftpfad des Luftkanals 14; Abluftleitung
- 14b: Austrittsöffnung des Abluftpfads 14a
- 14c: Umluftpfad des Luftkanals 14; Umluftleitung
- 14d: Austrittsöffnung des Umluftpfads 14c
- 15: Luftkanalgehäuse
- 16: Trennelement; Trennblech; Leitblech
- 17: Regulierungselement; Trennklappe 17; Trennzunge; Zunge; Zungenblech
- 18: Drehelement; Schwenkelement; Scharnier

- 2: Antrieb
- 20: Betätigungswelle
- 21: Exzenterelement; Exzenterscheibe
- 22: Führungselement; Rückholelement; Rückstellfeder; Zugfeder
- 22a: Trennklappenbefestigungspunkt
- 22b: Luftkanalgehäusebefestigungspunkt
- 23: Endlagenschalter des Abluftpfads 14a
- 24: Endlagenschalter des Umluftpfads 14c

## Patentansprüche

1. Wäschepflegegerät (1), vorzugsweise Wäschetrockner (1),
mit einem Gebläse (10), welches in einem Gehäuse (12) angeordnet ist und ausgebildet ist, einen Prozessluftstrom (A) zu erzeugen, wobei das Gehäuse (12) einen Austrittsbereich (13) aufweist, dem sich ein Luftkanal (14) anschließt, welcher ausgebildet ist, den Prozessluftstrom (A) von dem Gebläse (10) zu erhalten und als Abluftstrom (B) einem Abluftpfad (14a) sowie als Umluftstrom (C) einem Umluftpfad (14c) zuzuführen,
wobei der Abluftpfad (14a) und der Umluftpfad (14c) durch ein in den Prozessluftstrom (A) hineinragendes Trennelement (16) voneinander getrennt sind,
**gekennzeichnet durch**
ein Regulierungselement (17), welches dem Gebläse (10) zugewandt drehbar an dem Trennelement (16) angeordnet und ausgebildet ist, die Zuführung des Prozessluftstroms (A) in den Abluftpfad (14a) und in den Umluftpfad (14c) zu verändern.

2. Wäschepflegegerät (1) nach Anspruch 1, **dadurch gekennzeichnet, dass**
das Regulierungselement (17) als Trennklappe (17) ausgebildet ist.

3. Wäschepflegegerät (1) nach Anspruch 1 oder 2, **dadurch gekennzeichnet, dass**
das Regulierungselement (17) ausgebildet ist, den Prozessluftstrom (A) vollständig dem Abluftpfad (14a), vollständig dem Umluftpfad (14c) oder teilweise dem Abluftpfad (14a) und teilweise dem Umluftpfad (14c) zuzuführen.

4. Wäschepflegegerät (1) nach einem der vorangehenden Ansprüche, **gekennzeichnet durch**
einen Antrieb (2), welcher angeordnet und ausgebildet ist, die Stellung des Regulierungselements (17) zu verändern.

5. Wäschepflegegerät (1) nach Anspruch 4, **dadurch gekennzeichnet, dass**
der Antrieb (2) ein Exzenterelement (21) aufweist, welches ausgebildet ist, die Stellung des Regulierungselements (17) zu verändern.

6. Wäschepflegegerät (1) nach Anspruch 5, **dadurch gekennzeichnet, dass**
das Exzenterelement (21) in dem Abluftpfad (14a) oder in dem Umluftpfad (14c), vorzugsweise in dem Abluftpfad (14a), angeordnet ist.

7. Wäschepflegegerät (1) nach Anspruch 5 oder 6, **dadurch gekennzeichnet, dass**
der Antrieb (2) eine Betätigungswelle (20) aufweist, welche ausgebildet ist, das Exzenterelement (21) rotatorisch zu betätigen.

8. Wäschepflegegerät (1) nach Anspruch 7, **dadurch gekennzeichnet, dass**
die Drehachse der Betätigungswelle (20) parallel zu der Drehachse des Gebläses (10) verläuft.

9. Wäschepflegegerät (1) nach einem der vorangehenden Ansprüche, **dadurch gekennzeichnet, dass**
das Regulierungselement (17) mittels eines Drehelements (18) an dem Trennelement (16) angeordnet ist.

10. Wäschepflegegerät (1) nach Anspruch 9, **dadurch gekennzeichnet, dass**
die Drehachse des Drehelements (18) parallel zu der Drehachse des Gebläses (10) verläuft.

11. Wäschepflegegerät (1) nach einem der Ansprüche 5 bis 10, **gekennzeichnet durch**
ein Führungselement (22), welches ausgebildet und angeordnet ist, das Regulierungselement (17) in Kontakt mit dem Exzenterelement (21) zu halten.

12. Wäschepflegegerät (1) nach Anspruch 11, **dadurch gekennzeichnet, dass**
das Führungselement (22) eine Zugfeder (22) ist.

13. Wäschepflegegerät (1) nach einem der Ansprüche 4 bis 12, **dadurch gekennzeichnet, dass**
der Antrieb (2) ausgebildet ist, in lediglich einer Drehrichtung (R1; R2) betrieben zu werden.

14. Wäschepflegegerät (1) nach einem der Ansprüche 4 bis 12, **dadurch gekennzeichnet, dass**
der Antrieb (2) ausgebildet ist, sowohl in einer ersten Drehrichtung (R1) als auch in einer zweiten Drehrichtung (R2) betrieben zu werden.

15. Wäschepflegegerät (1) nach einem der vorangehenden Ansprüche, **gekennzeichnet durch**
einen Endlagenschalter (23) des Abluftpfads (14a) und/oder durch einen Endlagenschalter (24) des Umluftpfads (14c), welcher ausgebildet ist, in einer Endlage (S1; S2) des Regulierungselements (17) von dem Regulierungselement (17) kontaktiert zu werden.
